# DEMANDE DE BREVET EUROPEEN

(11) **EP 4 838 312 A2**
(43) Date de publication de la demande: **11.11.2026**
(21) Numéro de dépôt: 26207230.9
(22) Date de dépôt: 09.04.2021
(51) Int. Cl.: G04D 3/02

(54) **PROCÉDÉ DE TOURNAGE LASER UTILISANT UN SYSTÈME**

(30) Priorité: 10.04.2020 EP 20169209
(62) Numéro(s) de document de la (des) demande(s) initiale(s) en application de l'article 76 CBE: 21718102.3 / 4 132 739
(71) Demandeur: ROLEX SA, 1211 Genève 26 (CH)
(72) Inventeur: CHAUTEMPS, Cédric, 74450 Le Grand-Bornand (FR); OLIVEIRA, Alexandre, 74800 Amancy (FR); PORTELLANO, Matthias, 33400 Talence (FR)
(74) Mandataire: Moinas & Savoye SARL

(57) **Abrégé**

Système (1) de tournage laser pour la réalisation d'un composant horloger (60), le système comprenant une broche rotative (3) de mise en mouvement d'un barreau de matière et un scanner galvanométrique (12) apte à émettre un faisceau laser femto seconde balayant un profil générateur du composant à usiner dans le barreau de matière.

## Description

L'invention concerne un système de tournage laser. L'invention concerne aussi un procédé de tournage laser. L'invention concerne enfin un composant obtenu par l'utilisation d'un tel système ou par la mise en œuvre d'un tel procédé.

Afin de réaliser des composants comprenant une ou plusieurs formes de révolution, il est connu de mettre en œuvre un procédé d'usinage par enlèvement de matière de type tournage. De manière classique, l'enlèvement de matière est réalisé à l'aide d'un outil coupant agissant sur un barreau de matière mis en rotation et à partir duquel on souhaite obtenir le composant.

La réalisation de composants horlogers de révolution de petites dimensions avec une grande précision, comme des axes horlogers, est généralement effectuée par tournage, en particulier par décolletage des composants en série dans une barre métallique. Ceci permet des cadences de production industrielles, mais présente quelques inconvénients liés à la nature des matériaux à usiner.

Alors qu'il est relativement aisé de décolleter des matières spécifiquement adaptées à cette technique, comme les aciers de décolletage contenant un élément brise-copeaux tel que le soufre, le décolletage de pièces en céramique, mais également en métaux durs, induit une forte usure des outils, qui rend cette technique peu productive en comparaison de son application à des matériaux plus adaptés. De plus, le décolletage de matériaux durs induit généralement une vibration de la barre et ne permet pas d'atteindre les rugosités requises.

Le tournage laser effectué avec des sources laser continues (par exemple laser CO2) a été largement développé dans l'industrie, mais il ne permet d'atteindre que des précisions de l'ordre de quelques dixièmes de millimètres, ce qui peut s'avérer insuffisant pour certaines applications et son impact thermique sur les composants obtenus peut générer des trempes locales néfastes à la microstructure de la matière, ou pire encore, des déformations thermiques qui affectent les dimensions de la pièce, notamment dans le cas de composants de faible volume. Il n'a, de ce fait, pas été retenu comme une alternative avantageuse au tournage conventionnel pour des pièces de dimensions moyennes, encore moins pour des pièces de taille micrométrique.

Les documents EP2314412A2, EP2374569A2, EP2489458A1 et WO2016005133A1 décrivent différents types d'équipements permettant d'usiner à l'aide d'un laser.

Plusieurs études portant sur la texturation par laser femto-seconde ont été publiées.

Dans l'étude « Development of laser turning using femtosecond laser ablation » (Yokotani, A., Kawahara, K., Kurogi, Y., Matsuo, N., Sawada, H. and Kurosawa, K. (2002), Proceedings of SPIE, Vol. 4426, pp.90-93), il est démontré qu'une technique laser permettait d'atteindre des niveaux de rugosité bas ou volontairement hauts sur des surfaces planes.

Dans l'étude « Optimisation of Nd:YAG laser micro-turning process using response surface methodology » (Kibria, G., Doloi, B., Bhattacharyya, B. (2012), Int. J. Precision Technology, Vol.3, No.1), un laser Nd:YAG percute radialement une pièce céramique cylindrique tournante en oxyde d'aluminium pour observer l'effet des paramètres de vitesse et énergie par impulsion sur la rugosité. Dans ce dispositif, la trépanation n'est pas utilisée et le taux de recouvrement est uniquement piloté par la vitesse de rotation de la pièce qui n'excède pas 600 t/min. La pièce est percutée radialement par des impulsions nanoseconde.

Le but de l'invention est de fournir un système de tournage laser permettant de remédier aux inconvénients mentionnés précédemment et d'améliorer les systèmes de tournage laser connus de l'art antérieur. En particulier, l'invention propose un système de tournage laser qui soit compétitif comparativement aux systèmes de tournage connus.

Un système de tournage selon l'invention est défini par la revendication 1.

Différents modes de réalisation du système sont définis par les revendications 2 à 11.

Un procédé de tournage selon l'invention est défini par la revendication 12.

Un composant selon l'invention est défini par la revendication 13.

Une pièce d'horlogerie selon l'invention est définie par la revendication 14.

Le dessin annexé représente, à titre d'exemple, un mode de réalisation d'un système de tournage selon l'invention et un mode de réalisation d'une pièce d'horlogerie selon l'invention.
La figure 1 est une vue schématique d'un mode de réalisation d'un système de tournage selon l'invention.
La figure 2 est une vue schématique de la trajectoire du faisceau laser selon l'invention.
La figure 3 est une vue schématique d'un mode de réalisation d'une pièce d'horlogerie selon l'invention.

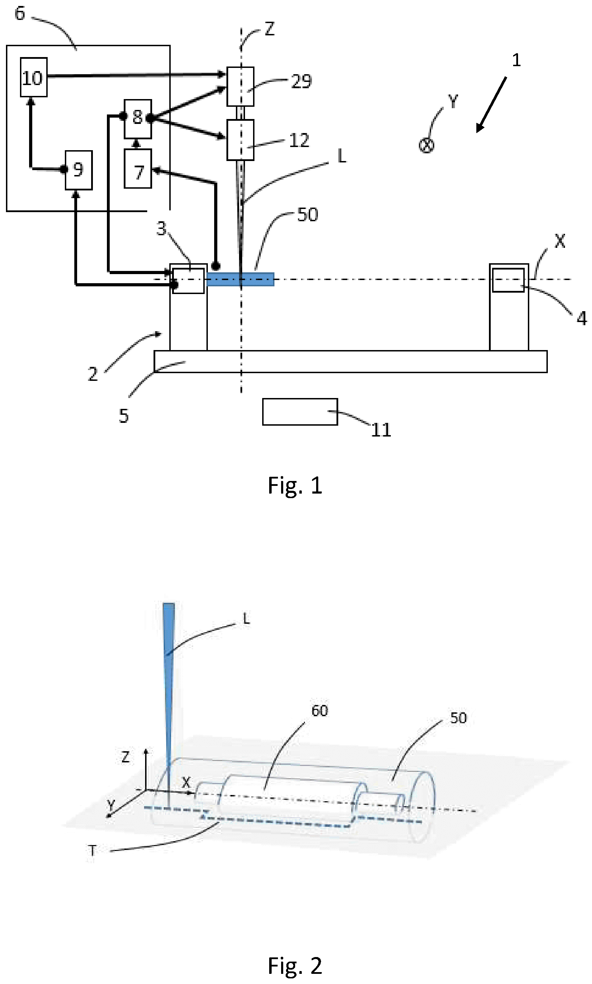

Un mode de réalisation d'un système 1 de tournage pour la réalisation de composants est décrit ci-après en référence à la figure 1.

Le système comprend :
- une broche rotative 3 de mise en mouvement d'un barreau 50 de matière, et
- un scanner 12 galvanométrique apte à diriger un faisceau laser femto seconde selon une trajectoire balayant le profil générateur de la pièce à usiner dans le barreau de matière. De préférence, le balayage est réalisé de manière tangentielle au barreau 50 de matière ou selon une incidence tangentielle au barreau 50 de matière.

Plus généralement, le système comprend un module 2 de mise en mouvement du barreau de matière, en particulier de mise en rotation du barreau de matière selon un premier axe X. Ce module de mise en mouvement du barreau de matière comprend la broche 3 rotative selon le premier axe X. De préférence, la broche 3 peut tourner à plus de 20'000 t/min, voire à plus de 50'000 t/min, voire à plus de 100'000 t/min. Par exemple, la broche 3 est une électrobroche. De préférence, la broche 3 est équipée d'une pince de préhension, notamment pneumatique.

Le module 2 de mise en mouvement comprend de préférence en outre une contre-broche 4 rotative. Cette contre-broche 4 permet de réaliser des reprises sur les pièces lorsqu'elles sont détachées de la broche 3. La contre-broche 4 permet la mise en rotation selon le premier axe X. De préférence, la contre-broche 4 peut tourner à plus de 20'000 t/min, voire à plus de 50'000 t/min, voire à plus de 100'000 t/min. Par exemple, la contre-broche 4 est une électrobroche. De préférence, la contre-broche 4 est équipée d'une pince de préhension, notamment pneumatique. En outre, la contre-broche 4 est mobile en translation selon le premier axe X relativement à la broche 3. Par exemple, une telle contre-broche permet de réaliser un usinage de tronçonnage du composant pour le détacher du barreau. Avec les méthodes traditionnelles de tronçonnage, la face tronçonnée du composant présente systématiquement une bavure lorsqu'il est détaché du barreau.

Le module 2 de mise en mouvement comprend également un élément 5 permettant le déplacement de la broche 3 et de la contre-broche 4 dans un plan X-Y contenant le premier axe X et un deuxième axe Y perpendiculaire au premier axe X.

Le système comprend un élément 29 de génération d'un faisceau laser. Le faisceau laser utilisé pour réaliser l'usinage est un faisceau laser composé d'impulsions lumineuses ayant une durée d'impulsion comprise entre 100fs et 10ps. Il peut avoir une fréquence supérieure à 50 kHz, c'est-à-dire que des impulsions ou tirs sont émis à une fréquence supérieure à 50 kHz.

Le scanner 12 est disposé entre la sortie de l'élément 29 de génération du faisceau laser et la pièce à usiner, sur le chemin du faisceau laser.

Le scanner galvanométrique 12 est un dispositif électromécanique intégrant de 1 à 3 axes de rotation et éventuellement des axes de translations, sur lesquels sont montés des éléments optiques de type miroirs ou lentilles. Des actionneurs pilotés en tension commandent le mouvement de ces axes et permettent de réaliser un déplacement du faisceau laser selon 2 ou 3 axes de manière extrêmement rapide et précise. Le scanner galvanométrique 12 comprend un dispositif de focalisation permettant de concentrer le laser sur un point focal. Une gestion avancée de la synchronisation entre le mouvement des éléments optiques et le déclenchement des tirs laser permet de réaliser une génératrice de la pièce de révolution usinée.

Un scanner galvanométrique est différent d'un scanner à miroir polygonal, qui permet un balayage selon une unique direction.

De préférence, le scanner 12 est agencé et/ou configuré pour déplacer le point de focalisation du laser à une vitesse de plus de 0.5 m/s, voir de plus de 10 m/s, voire de plus de 20 m/s. Le scanner 12 est agencé et/ou configuré pour déplacer le point de focalisation du laser avec des accélérations de plus de 5 m/s², voire de plus de 500 m/s², voire de plus de 5'000 m/s², voire de plus de 50'000 m/s².

Avantageusement, le scanner 12 est monté mobile en translation selon un troisième axe Z orthogonal aux premier et deuxième axes X et Y. Autrement dit, le scanner est monté sur un axe de translation orthogonal au premier axe X. Ainsi, le scanner galvanométrique permet de positionner aux endroits souhaités le point de focalisation du faisceau laser, notamment sur une tangente située sur le plan médian horizontal du barreau de matière usiné.

Le système comprend avantageusement un module 6 d'automatisation permettant de commander le procédé d'usinage ou le procédé de fonctionnement du système.

Le module 6 d'automatisation comprend un élément 7 de mesure en temps réel d'au moins une dimension, notamment d'un diamètre du composant. Son apport est décisif pour la réalisation de composants comprenant des diamètres de quelques dizaines de micromètres, dans des tolérances de l'ordre du micromètre.

En effet, le diamètre d'un faisceau laser femtoseconde focalisé est typiquement de l'ordre de vingt micromètres et la profondeur de champ du même ordre.

Sur des procédés d'usinage par faisceau laser avec incidence radiale, le tir laser impacte la couche de matière se trouvant en dessous de la couche directement ablatée. Cela est dû à la profondeur de champ incompressible du faisceau laser. Cette limitation physique a pour conséquence l'impossibilité de réaliser des pièces de révolution avec une précision diamétrale inférieure à l'ordre de grandeur de la taille du faisceau, à savoir vingt micromètres.

Cette limitation est outrepassée avec l'utilisation d'un faisceau laser incident tangentiel. L'ablation est réalisée en utilisant uniquement le bord du profil gaussien du faisceau laser. Dans ce cas de figure, les tirs laser successifs ne conduisent pas à une ablation supplémentaire. En conséquence, la précision de la cote diamétrale est définie par la précision du positionnement du faisceau laser et non par sa taille. La précision du positionnement du faisceau laser est elle-même définie par la précision de positionnement du scanner 12 et de l'élément 5 de déplacement de la broche 3 selon l'axe Y et est de l'ordre d'un micromètre.

Un asservissement de la cote diamétrale par l'élément de mesure 7, dont la précision sur la mesure est de l'ordre du micromètre, combiné avec un procédé d'ablation par faisceau tangentiel, permet de réaliser des pièces de tournage avec une précision sur la génératrice du profil de ce même ordre, à savoir un micromètre.

Le module 6 d'automatisation comprend en outre avantageusement un module d'asservissement 8 des paramètres du laser et/ou du déplacement du faisceau laser en fonction de la mesure effectuée par l'élément 7 de mesure.

Le module 6 d'automatisation pilote de nombreux actionneurs du système, parmi lesquels la broche 3 et/ou la contre-broche 4 et/ou l'élément 29 de génération du faisceau laser. Ce pilotage peut être réalisé en particulier en fonction de mesures de dimensions de la pièce usinée. Par exemple, le module 8 d'asservissement peut asservir la vitesse de rotation de la broche 3 ou de la contre-broche 4 à la dimension de la pièce à usiner, notamment au diamètre de la pièce à usiner. Il est ainsi possible de faire varier les vitesses des broche et contre-broche en fonction de la valeur théorique du diamètre à usiner, par exemple afin d'avoir le même taux de recouvrement latéral des impacts du laser (fonction de la vitesse de rotation de la broche, du diamètre usiné et de la fréquence du laser). De façon plus générale, il est possible de faire varier les vitesses des broche et contre-broche pour obtenir un taux de recouvrement variable ou constant en fonction du diamètre et/ou de la partie du composant, par exemple afin d'obtenir un état de surface donné, par exemple un état de surface différent sur différentes parties du composant.

L'élément 7 de mesure peut être un micromètre optique.

De plus, le module 6 d'automatisation incluant l'élément 7 de mesure permet de faire un suivi de production afin de rectifier toutes dérives du procédé d'usinage. Grâce à l'acquisition des données par l'élément 7 de mesure, il est possible d'améliorer la répétabilité de l'usinage des composants. Grâce à l'acquisition des données par l'élément 7 de mesure, il est possible d'atteindre les cotes finales du composant avec une très haute précision qui ne serait pas atteignable sans cet asservissement, notamment à cause des dérives lors de l'usinage et/ou de la vitesse de rotation très élevée de la broche.

Le module 6 d'automatisation comprend avantageusement un encodeur rotatif 9 configuré de sorte à connaître en permanence la position angulaire de la broche, notamment la position angulaire absolue de la broche.

En outre, le module 6 d'automatisation comprend avantageusement un module 10 de synchronisation configuré de sorte à synchroniser les impulsions du laser à la position angulaire de la broche.

Ainsi, il est possible de synchroniser cette position angulaire et le balayage du scanner. Il devient ainsi possible d'envisager la réalisation de pièces comportant des surfaces n'étant pas de révolution selon le premier axe, comme des surfaces de pas de vis, de dentures, de perçages radiaux, de méplats, de rainures, de surfaces de section non circulaires, etc.

Le système comprend avantageusement un ravitailleur 11. Le ravitailleur intégré au système permet d'automatiser l'insertion du barreau de matière dans la broche de manière simple, sans effectuer de rotation de la contre-broche. Le barreau de matière est alors inséré dans l'espace entre la broche et la contre-broche, puis poussé par la contre-broche dans la pince de la broche.

Un mode d'exécution d'un procédé de tournage laser, notamment de décolletage laser, est décrit ci-après.

Le procédé permet d'obtenir un composant horloger à partir d'un barreau de matière. Le procédé comprend une utilisation d'un système de tournage laser décrit précédemment.

Les déplacements du faisceau laser L sont pilotés par l'activation du scanner 12 galvanométrique. Ceci permet des déplacements très rapides du faisceau laser. Par conséquent, le taux de recouvrement des impacts du faisceau laser sur la pièce à usiner est réduit et la qualité d'usinage est supérieure. Le taux de recouvrement est défini comme le rapport entre (i) l'aire de la surface d'intersection de deux impacts successifs du faisceau laser sur la pièce et (ii) l'aire de la surface d'un impact du faisceau laser sur la pièce.

Le faisceau laser est de préférence focalisé sur le plan médian horizontal X-Y de la pièce, correspondant au plan horizontal passant par le premier axe X de rotation de la broche. Le faisceau est encore orienté avec une incidence tangentielle ou sensiblement tangentielle relativement au barreau en rotation, c'est-à-dire orienté selon le troisième axe Z ou sensiblement selon le troisième axe Z et déplacé selon une trajectoire T venant suivre le contour final souhaité pour le composant, comme illustré en figure 2.

De cette manière, la matière du rayon concerné de la pièce à usiner est entièrement ablatée, sans ablation supplémentaire si les tirs de laser sont poursuivis. Ce ne serait pas le cas si l'incidence du laser n'était pas tangentielle, en particulier si l'incidence du faisceau laser était radiale. En effet, dans cette hypothèse, des tirs supplémentaires conduiraient à des ablations supplémentaires.

En outre, avec une incidence tangentielle du faisceau laser, la matière ablatée est éjectée dans une direction opposée au faisceau et ne vient pas remonter dans le faisceau et le perturber comme dans le cas d'une incidence radiale.

Cette configuration permet une maîtrise parfaite des passes d'usinage. De plus, le bord du profil gaussien du faisceau est en contact avec la surface de la pièce à usiner. L'énergie apportée à la surface de la pièce est inférieure au seuil d'ablation, et la surface de la pièce subit ainsi l'équivalent d'une passe de finition, avec un lissage de la matière résiduelle.

Avantageusement, une ligne génératrice de profil de la pièce à usiner est créée par le système 6. Cette ligne constitue un profil selon lequel le point de focalisation du faisceau laser se déplace selon la trajectoire T dans le plan X-Y par l'action du scanner 12 galvanométrique lors de l'usinage de la pièce. En outre, pour réaliser l'usinage de la pièce, on met la pièce en rotation autour du premier axe X et on rapproche progressivement la ligne génératrice du premier axe X en la déplaçant dans le plan X-Y, en particulier selon le deuxième axe Y, notamment en utilisant l'élément 5 du module 2 de mise en mouvement. Les différents parcours de la ligne génératrice par le faisceau laser constituent chacun une passe d'usinage.

La mise en œuvre du procédé décrit précédemment permet d'obtenir un mode de réalisation d'un composant, notamment un composant horloger 60, notamment un axe horloger. De préférence, le composant présente un diamètre inférieur à 3 mm et/ou une longueur inférieure à 15 mm.

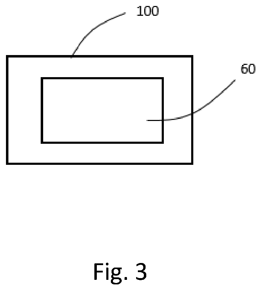

Un mode de réalisation d'une pièce d'horlogerie 100, notamment une montre, en particulier une montre bracelet, est représenté sur la figure 3. La pièce d'horlogerie comprend un composant horloger 60 décrit précédemment.

Les technologies d'usinage par laser permettent de s'affranchir de l'usure des outils mentionnée plus haut, mais présentent également les avantages suivants :
- La gamme des matériaux usinables est sensiblement élargie, car il n'y a plus besoin de tenir compte du comportement des copeaux (notamment par rapport aux aciers de décolletage contenant traditionnellement du soufre comme brise-copeaux).
- L'effort de coupe est négligeable et la barre ne vibre pas. En effet, la fréquence du tir laser peut être asservie de façon à ce que, au fur et à mesure de l'usinage, les modes propres évolutifs de la pièce usinée ne soient jamais excités.
- Aucun lubrifiant n'est nécessaire, l'usinage par laser femto-seconde étant athermique.
- Un durcissement de la surface et/ou une texturation de la surface sont possibles, de manière simultanée à l'usinage.

Dans tout ce document, les termes « barreau », « pièce » et « composant » sont utilisés pour désigner le composant à différents stades de sa réalisation. Le terme « barreau » désigne de préférence le barreau de matière 50 avant le début de son usinage laser et au début de son usinage laser. Le terme « pièce » désigne de préférence le barreau ou le composant lors de l'usinage laser. Le terme « composant » désigne de préférence le composant 60 à la fin de son usinage laser et après son usinage laser.

## Revendications

1. Système (1) de tournage laser pour la réalisation d'un composant horloger (60), le système comprenant une broche rotative (3) de mise en mouvement d'un barreau de matière et un scanner galvanométrique (12) apte à émettre un faisceau laser femto seconde balayant, notamment balayant avec une incidence tangentielle à un barreau de matière, un profil générateur du composant à usiner dans le barreau de matière.

2. Système selon la revendication précédente, **caractérisé en ce que** le scanner est configuré pour déplacer le point de focalisation du laser à une vitesse de plus de 0.5 m/s, voire de plus de 10 m/s, voire de plus de 20 m/s et/ou avec des accélérations de plus de 5 m/s², voire de plus de 500 m/s², voire de plus de 5'000 m/s², voire de plus de 50'000 m/s².

3. Système selon l'une des revendications précédentes, **caractérisé en ce que** le scanner est monté sur un axe (Z) de translation orthogonal à l'axe (X) de la broche (3).

4. Système selon l'une des revendications précédentes, **caractérisé en ce que** la broche est apte à tourner à plus de 20'000 t/min, voire à plus de 50'000 t/min, voire à plus de 100'000 t/min.

5. Système selon l'une des revendications précédentes, **caractérisé en ce qu'**il comprend une contre broche (4).

6. Système selon l'une des revendications précédentes, **caractérisé en ce que** le faisceau laser a une fréquence supérieure à 50 kHz.

7. Système selon l'une des revendications précédentes, **caractérisé en ce qu'**il comprend un module (6) d'automatisation comprenant un élément (7) de mesure d'au moins une dimension du composant en temps réel.

8. Système selon la revendication 7, **caractérisé en ce qu'**il comprend un module (8) d'asservissement des paramètres du laser et/ou du déplacement du faisceau laser en fonction de la mesure effectuée par l'élément de mesure.

9. Système selon l'une des revendications précédentes, **caractérisé en ce qu'**il comprend un encodeur rotatif (9) configuré de sorte à connaître en permanence la position angulaire de la broche, notamment la position angulaire absolue de la broche.

10. Système selon la revendication précédente, **caractérisé en ce qu'**il comprend un module de synchronisation (10) configuré de sorte à synchroniser les impulsions du laser à la position angulaire de la broche.

11. Système selon l'une des revendications précédentes, **caractérisé en ce qu'**il comprend un ravitailleur (11).

12. Procédé de tournage laser, notamment de décolletage, d'un composant horloger à partir d'un barreau de matière, le procédé comprenant une utilisation d'un système selon l'une des revendications précédentes.

13. Composant horloger (60) obtenu par la mise en œuvre du procédé selon la revendication précédente.

14. Pièce d'horlogerie (100), notamment montre, en particulier montre bracelet, comprenant un composant horloger (60) selon la revendication précédente.
